Europäisches Patentamt

European Patent Office

Office européen des brevets

(19)

(11) Numéro de publication: **0 0 1 5 8 1 1**
**B1**

(12) **FASCICULE DE BREVET EUROPEEN**

(45) Date de publication du fascicule du brevet:
06.04.83

(21) Numéro de dépôt: 80400249.1

(22) Date de dépôt: 22.02.80

(51) Int. Cl.³: **C 01 G 43/00**, C 22 B 60/02,
C 25 B 1/00

(54) Procédé de récupération de l'uranium contenu dans un acide phosphorique impur.

(30) Priorité: 28.02.79 FR 7905155

(43) Date de publication de la demande:
17.09.80 Bulletin 80/19

(45) Mention de la délivrance du brevet:
06.04.83 Bulletin 83/14

(84) Etats contractants désignés:
AT BE DE GB IT NL

(56) Documents cités:
EP-A-0 008 552
FR-A-1 397 587
FR-A-2 288 058
US-A-3 711 591
US-A-3 737 513
US-A-3 835 214

(73) Titulaire: RHONE-POULENC CHIMIE DE BASE, 25, quai
Paul Doumer, F-92408 Courbevoie (FR)

(72) Inventeur: Pautrot, Jean-Marc, 14, rue du Château,
F-92200 Neuilly-sur-Seine (FR)

(74) Mandataire: Dubruc, Philippe et al, RHONE-POULENC
RECHERCHES Service Brevets Chimie et
Polymères 25, quai Paul-Doumer, F-92408 Courbevoie
Cedex (FR)

## Procédé de récupération de l'uranium contenu dans un acide phosphorique impur

La présente invention concerne un procédé de récupération de l'uranium contenu dans un acide phosphorique impur et elle concerne plus particulièrement la concentration et la purification de l'uranium extrait d'un acide phosphorique de voie humide.

Il est connu de récupérer l'uranium de solutions aqueuses le contenant à des concentrations faibles, en le séparant des autres espèces (le cas échéant valorisables) constitutives des minerais traités, au moyen d'un ensemble d'extractions liquide-liquide et de traitements chimiques ayant pour but d'isoler l'uranium et de le récupérer sous forme d'oxyde $U_3O_8$ de pureté élevée, utilisable comme source de combustible nucléaire. Ces procédés s'appliquent à la récupération à des minerais tels que les roches phosphatées, fournissant par ailleurs l'acide phosphorique ou à des minerais d'origines diverses à teneur plus ou moins élevée en uranium présent le plus souvent sous forme d'oxydes. Le procédé comporte généralement le traitement du minerai à l'aide d'un acide fort et concentré tel que les acides sulfurique, phosphorique, chlorhydrique, nitrique, pour fournir une solution aqueuse contenant des ions uranyl à l'état très dilué conjointement avec d'autres ions contaminants, d'où l'on récupère l'uranium.

Un exemple typique de traitement d'une telle solution est décrit par F. J. Hurst et D. J. Crouse — Ind. Eng. Chem. Process Des. Develop., volume n°11, n°1, 1972, pages 122–128 à partir d'un acide phosphorique brut de voie humide résultant de l'attaque d'une roche phosphatée par l'acide sulfurique.

La solution résultante dans laquelle l'uranium se trouve ou est transformé à l'état oxydé U (VI) est soumise à un premier cycle d'extraction de l'uranium au moyen d'un solvant organique constitué par un mélange synergique d'extractants, de l'acide di-(2 éthyl-hexyl) phosphorique (désigné par HDEHP) et d'oxyde de trioctylphosphine (désigné par TOPO), dilués dans un hydrocarbure du type kérosène. L'uranium est alors extrait dans le solvant organique sous forme d'un complexe d'uranyl formé entre les ions de l'uranium (VI) $UO_2^{2+}$ et le mélange synergique des extractants. L'uranium est ensuite récupéré de la phase organique dans laquelle il a été extrait, par contact avec une solution aqueuse d'acide phosphorique contenant suffisamment d'ions fer (II) pour réduire l'uranium (VI) en uranium (IV) qui, non extrait par le solvant organique, est transféré en phase aqueuse. Cette phase aqueuse est ensuite réoxydée pour amener à nouveau l'uranium au degré d'oxydation (VI) puis est soumise à un deuxième cycle d'extraction par une phase organique contenant le mélange synergique d'extractants HDEHP-TOPO pour obtenir finalement après réextraction de l'uranium par une solution de carbonate d'ammonium, un carbonate mixte d'uranium et d'ammonium suffisamment pur.

Ce procédé présente des inconvénients au plan de son exploitation industrielle. Notamment la réextraction réductrice dans le premier cycle nécessite l'adjonction d'ion fer (II) en quantité importante par rapport à l'uranium que l'on obtient par attaque du fer par l'acide phosphorique, qui est une réaction lente et difficile ou par introduction d'un sel de fer (II) – ce qui implique l'introduction d'un anion supplémentaire. De plus le deuxième cycle d'extraction est effectué sur la solution aqueuse oxydée et un traitement par un oxydant est nécessaire. Si cette oxydation est pratiquée au moyen de l'air ou d'air enrichi en oxygène, l'opération est lente et nécessite un appareillage conséquent. Si cette oxydation est pratiquée au moyen d'un oxydant chimique, elle implique l'introduction d'ions étrangers nuisibles; par exemple l'introduction d'ions chlorate fournit, après réduction, des ions chlorure qui sont des agents de corrosion puissants. Par ailleurs, l'emploi de peroxyde d'hydrogène est d'un prix de revient élevé.

Une fois que la phase aqueuse de réextraction réductrice a été réoxydée puis épuisée en uranium dans le deuxième cycle, celle-ci est éliminée du procédé. On perd donc pour le procédé pratiquement la totalité de l'acide phosphorique introduit, du fer et de l'agent chimique d'oxydation.

A titre d'exemple, en prenant comme base de calcul une unité d'extraction de l'uranium correspondant au traitement de 300 000 tonnes par an de $P_2O_5$ sur la base du procédé décrit ci-dessus, on doit s'attendre aux estimations suivantes:

a) si l'on choisit le sulfate ferreux heptahydraté comme agent réducteur compte tenu de son coût faible et de sa facilité de dissolution dans l'acide phosphorique, la quantité de fer (II) étant de 28 g par litre dans l'acide phosphorique d'extraction réductive, la consommation journalière est de l'ordre de 3,7 tonnes de sulfate ferreux 7 $H_2O$. Ceci pose donc des problèmes de stockage et d'approvisionnement d'autant plus aigus que ce produit est hygroscopique, donc difficile à manipuler (ce calcul tient compte d'une réoxydation partielle normale du fer (II) par l'air dans les mélangeurs décanteurs).

b) Si l'on choisit le fer métal solubilisé par l'acide phosphorique, la consommation serait encore de l'ordre de 300 kg par jour de métal et ceci nécessite un appareillage encombrant de dissolution du métal.

c) Si l'on choisit le peroxyde d'hydrogène comme moyen de réoxydation de la solution phosphorique contenant l'uranium (IV) et le fer (II)/ fer (III) provenant du premier cycle, avant son entrée dans le deuxième cycle d'extraction, la consommation journalière en peroxyde d'hydrogène à 70% est de l'ordre de 150 kg.

De plus, une fois la précédente solution phosphorique aqueuse réoxydée, elle entre dans le deuxième cycle où le solvant réalise l'extraction totale de l'uranium et d'une partie faible du fer. La solution aqueuse épuisée en uranium est alors renvoyée vers les unités de concentration phosphorique ou recyclée en amont de la colonne primaire d'extraction et l'agent réducteur est définitivement perdu pour l'extraction réductive subséquente de l'uranium.

Les brevets américains 3 711 591 et 3 737 513 mettent en œuvre en particulier des procédés du type de celui qui vient d'être décrit. Dans le dernier de ces brevets, l'oxydation de la solution aqueuse de réextraction du premier cycle se fait par des agents oxydants chimiques habituels: chlorate de sodium, peroxyde d'hydrogène, air par exemple. Les inconvénients que représente l'emploi de tels agents oxydants ont été mentionnés plus haut.

Le brevet 3 711 591 décrit la possibilité d'une oxydation et d'une réduction de cette même solution aqueuse par électrolyse. Cependant, le procédé de ce brevet rend nécessaire l'envoi d'au moins une partie de la solution aqueuse d'acide à l'appareil d'extraction de l'uranium du premier cycle et ensuite aux unités de concentration de l'acide. Un tel procédé présente donc encore l'inconvénient mentionné plus haut, c'est-à-dire une perte en agent réducteur.

La présente invention concerne donc un procédé continu de récupération de l'uranium au degré (VI) contenu dans un acide phosphorique aqueux brut comportant, dans un premier cycle, le traitement d'un acide phosphorique impur au moyen d'une phase organique d'extraction pour l'uranium (VI) mais extrayant peu l'uranium (IV), puis la séparation des phases; l'extraction en retour de la phase organique résultante chargée en uranium (VI) au moyen d'une solution aqueuse de réextraction de l'uranium (IV) et contenant un agent d'oxydoréduction à l'état réduit qui est réducteur de l'uranium (VI) en uranium (IV), puis la séparation des phases et le recyclage de la phase organique épuisée en uranium à l'extraction de l'acide phosphorique impur; l'oxydation de la précédente solution aqueuse chargée en uranium (IV) ce par quoi l'on oxyde l'uranium (IV) en uranium (VI) et l'agent d'oxydoréduction; dans un deuxième cycle, le traitement de la solution aqueuse précédente au moyen d'une deuxième phase organique d'extraction de l'uranium (VI), puis la séparation des phases, le lavage de la phase organique chargée en uranium (VI) au moyen d'eau et/ou d'un acide, puis la séparation d'une phase organique épurée d'où l'on récupère l'uranium par traitement de ladite phase organique au moyen d'une solution aqueuse contenant des ions carbonate et ammonium de manière à précipiter dans la phase aqueuse l'ammonium uranyl tricarbonate (AUT) et le recyclage de la précédente phase organique épuisée en uranium à l'extraction précédente, caractérisé en ce que la solution aqueuse résultante de la réextraction du premier cycle est traitée en totalité dans le compartiment anodique d'une cellule électrolytique à séparateur sous tension de courant continu, de manière à recueillir une phase aqueuse contenant de l'uranium sous forme U (VI) et l'agent d'oxydoréduction à l'état oxydé, l'oxydation de l'uranium étant éventuellement complétée par addition d'une faible quantité d'oxydant et, le cas échéant, le titre de ladite phase aqueuse en acide complexant étant réajusté, en ce qu'on traite ensuite ladite solution aqueuse au moyen de la phase organique d'extraction du deuxième cycle, puis après séparation des phases on traite la solution aqueuse résultante épuisée en uranium dans le compartiment cathodique de la cellule électrolytique précitée de manière à réduire l'agent d'oxydo-réduction avant de le recycler à l'étape de réextraction du premier cycle, ladite solution aqueuse circulant ainsi en boucle fermée entre les premier et deuxième cycles, sous la forme du troisième cycle et en ce que la phase organique d'extraction du deuxième cycle est lavée au moyen d'une solution aqueuse d'acide.

Grâce aux caractéristiques précitées, l'invention présente plusieurs avantages par rapport à l'art antérieur. En effet, la mise en œuvre d'un processus d'électrolyse avec une cellule unique et d'une circulation en boucle fermée de la solution aqueuse entraîne une économie importante en énergie et en réactif, la consommation en agent d'oxydo-réduction étant nulle.

Selon l'invention, l'acide phosphorique de départ est représenté d'une manière typique par un acide phosphorique brut de voie humide obtenu par attaque de roches phosphatées par l'acide sulfurique après filtration, le cas échéant, après traitement de clarification et de stabilisation vis-à-vis des impuretés organiques et minérales et contenant de l'uranium au degré (VI). Dans le premier cycle selon l'invention on soumet l'acide phosphorique précédent à une extraction au moyen d'une phase organique d'extraction de l'uranium (VI).

La phase organique d'extraction de ce premier cycle contient un extractant pour les ions uranium (VI) mais extrayant peu l'uranium (IV). Ce type d'extractant est bien connu dans la technique. Il comprend les extractants cationiques parmi lesquels on peut citer à titre d'exemples non limitatifs, des produits tels que certains acides mono ou dialkylphosphoriques, alkylphosphoniques, alkylphénylphosphoriques, alkylphosphiniques, alkylpyrophosphoriques utilisés seuls ou en mélange, les chaînes alkyle comportant en général de 4 à 10 atomes de carbone. Le cas échéant, l'agent d'extraction tel que défini ci-dessus peut être associé à un agent synergique d'extraction bien connu tel que par exemple les alkylphosphates, alkylphosphonates, alkylphosphinates ou oxydes de trialkylphosphine. Parmi les couples convenant bien au cas de l'extraction de l'uranium de l'acide phosphorique, on peut citer à titre d'exemple le mélange acide di(2 éthylhexyl) phosphorique − oxyde de trioctylphosphine. Il comprend de même des extractants anioniques tels que certaines alkylamines secondaires ou tertiaires non solubles dans l'eau et des extractants bien connus, à caractère neutre, non miscibles dans l'eau tels que des phosphates de trialkyle.

La phase organique d'extraction contient, le cas échéant, un diluant organique inerte vis-à-vis des extractants afin d'améliorer les propriétés hydrodynamiques de la phase organique. Selon l'invention, de nombreux solvants organiques ou leurs mélanges peuvent être utilisés en tant que diluant. A titre illustratif, on peut citer les hydrocarbures aliphatiques comme le kérosène, aromatiques, halogénés et des éthers de pétrole, etc... En général, les caractéristiques du diluant inerte ne sont pas cirtiques bien que certains présentent des avantages dans des conditions particulières d'utilisation.

La concentration de l'extractant dans le diluant peut varier dans les larges limites comprises entre 0,05 molaire et l'extractant pur. Toutefois, du point de vue pratique, on utilise habituellement des solutions d'extractant comprises entre 0,1 et 2 molaires. Dans le cas de l'utilisation d'un extractant conjointement avec un agent synergique d'extraction, la solution va de 0,1 à 2 molaires pour l'extractant et de 0,01 à 2 molaires pour l'agent synergique.

L'extraction de l'acide phosphorique de départ se pratique d'une manière conventionnelle dans un appareil de mise en contact liquide-liquide. On peut réaliser cette mise en contact dans des mélangeurs-décanteurs, des colonnes vides, garnies ou pulsées, le contact étant à co-courant ou à contre-courant. La température n'est pas critique et peut varier de 20 à 80 °C, de préférence au voisinage de 50 °C.

Le rapport des débits de la phase organique d'extraction à l'acide de départ n'est pas critique. Toutefois il est habituellement compris entre 0,2 et 5.

Après séparation des phases, la phase organique contient de l'uranium au degré d'oxydation (VI), compte tenu des conditions de réalisation de cette solution. Elle contient également d'autres espèces chimiques en fonction de ses conditions de réalisation. Notamment, elle contient habituellement de l'acide phosphorique et d'autres anions et des cations de métaux comme Al, Fe, Ti, V, etc... à l'état faiblement concentré. La concentration en uranium de la phase organique est généralement comprise entre 20 et 3000 mg exprimée en uranium métal par litre de phase, de préférence entre 50 et 500 mg par litre.

Dans la deuxième étape de ce premier cycle, on met en contact la phase organique précédente chargée en U (VI) avec une solution aqueuse de réextraction faisant partie du troisième cycle selon la présente invention.

La solution aqueuse précédente contient, en général, un acide fort et complexant tel que l'acide phosphorique ou chlorhydrique et éventuellement, d'autres acides ou leurs mélanges, avec la restriction que la présence de ces acides ne conduise pas à une précipitation de l'uranium. La solution aqueuse contient également un agent d'oxydo-réduction de l'uranium (VI) en uranium (IV), l'agent étant à l'état réduit. Le potentiel électrochimique du couple oxydo-réducteur précédent dans la solution aqueuse considérée est tel qu'il soit inférieur à celui du couple uranium (VI) – uranium (IV) dans ladite solution. Un couple oxydo-réducteur représentatif est le couple fer (III)/fer (II). Par conséquent, dans le cas d'utilisation de ce couple, la solution aqueuse contient du fer au degré d'oxydation (II). Afin de déplacer l'équilibre de la réaction entre les ions U (VI) et Fe (II) d'une part, et U (IV) et Fe (III) d'autre part, dans le sens favorable à la production d'ions U (IV), il y a lieu que la solution contienne un important excès d'ion fer (II) par rapport aux ions uranium. La concentration de la solution en fer au degré d'oxydation (II) est habituellement comprise entre 0,5 et 100 grammes par litre. La concentration en acide fort de la solution peut varier dans de larges limites. Toutefois, dans la pratique, en vue d'obtenir un épuisement maximal en uranium de la solution organique, la concentration sera choisie en fonction des phases spécifiques utilisées et de la température. Dans le cas où l'acide fort et complexant de la solution aqueuse est l'acide phosphorique, sa concentration dans la solution doit être comprise entre 18% et 70%, de préférence supérieure à 28% en poids de $P_2O_5$. La solution peut également contenir des ions fer au degré d'oxydation (III); le rapport de la concentration en ions fer (II) à la concentration en ions fer (III) peut varier dans de très larges limites. Toutefois, dans la pratique, une valeur supérieure à 0,1 est indiquée, mais de préférence, elle est supérieure à 2.

La phase organique contenant l'uranium au degré d'oxydation (VI) et la solution aqueuse qui ont été décrites ci-dessus, sont mises en contact dans un appareil conventionnel d'extraction liquide-liquide. On peut réaliser cette mise en contact dans des mélangeurs-décanteurs, des colonnes vides, garnies ou pulsées, ou tout autre appareil approprié, le contact étant à co-courant ou à contre-courant. La température lors de la mise en contact n'est pas critique, mais pour des raisons pratiques on préfère opérer entre 20 et 80 °C, de préférence au voisinage de 50 °C.

Le rapport des débits de la phase organique à la solution aqueuse d'extraction entrant dans la zone de contact n'est pas critique mais doit être maintenu le plus élevé possible afin de récupérer l'uranium sous forme d'une solution concentrée. Toutefois, une valeur comprise entre 20 et 60 conduit aux meilleurs résultats. Cet intervalle de valeur ne tient pas compte d'un éventuel recyclage interne à l'appareillage.

Au cours de la mise en contact, on pense que l'équilibre de partage de l'uranium (VI) entre la phase organique et la solution aqueuse s'établit rapidement, tandis que la réduction de l'uranium (VI) dans la solution aqueuse par l'agent réducteur est lente. La connaissance de cette cinétique de réduction et des isothermes de partage de U (VI) et de U (IV) entre les deux phases permet de régler les différents paramètres de la mise en contact en vue d'un résultat maximal de l'extraction.

Après la précédente mise en contact et la séparation des phases, la phase organique épuisée en uranium est recyclée à l'extraction de l'acide phosphorique de départ sous forme d'une boucle de circulation qui constitue le premier cycle de l'invention.

La phase aqueuse obtenue par séparation et contenant les ions U (IV) et l'agent oxydo-réducteur à l'état partiellement oxydé alimente en totalité le compartiment anodique d'une cellule électrolytique à séparateur sous tension de courant continu, ce par quoi l'on recueille, en tant que résultat, une phase aqueuse contenant l'uranium substantiellement sous forme U (VI) et l'agent d'oxydo-réduction à l'état oxydé.

Les cellules électrolytiques utilisées pour la mise en œuvre du procédé de l'invention sont des cellules à séparateur bien connues. Comme séparateur, on peut utiliser un matériau poreux tel qu'une céramique ou une matière plastique rendue poreuse par frittage ou par introduction du porophore ou une membrane échangeuse d'ion. Parmi ces séparateurs, on préfère une membrane échangeuse d'ion cationique, de préférence constituée de polymère perfluoré à groupements acide sulfonique. Les anodes sont en général constituées de graphite ou d'un métal recouvert d'un revêtement électroactif. Les cathodes peuvent être constituées de différents métaux comme le platine, le plomb ou alliages. La configuration des cellules est en général du type plane à grande surface d'électrode et à espacement faible entre les électrodes. Dans une forme préférentielle de mise en œuvre industrielle, on utilise une batterie d'éléments d'électrolyse montés en série dans un dispositif multicellulaire du type filtre-presse bien connu. Dans cette forme de réalisation, l'alimentation des compartiments cathodiques peut être en parallèle ou en série, ceci afin de régler les débits de liquide dans chaque élément. Afin de favoriser les réactions électrochimiques, il peut s'avérer judicieux d'augmenter la surface active des électrodes ou de provoquer une agitation importante des solutions par des jeux de chicanes. De même, l'alimentation des compartiments anodiques est du type en série ou en parallèle. En plus, afin d'équilibrer les pressions des deux compartiments, les compartiments anodique et cathodique peuvent comporter un recyclage de la solution sortante.

Selon l'invention on utilise des compartiments anodique et cathodique regroupés dans une cellule électrolytique regroupés dans une cellule électrolytique à séparateur sous tension de courant unique telle que par exemple revendiquée dans la demande de brevet français n° 7 823 950 au nom de la demanderesse.

La phase aqueuse précédente sortant du compartiment anodique de la cellule d'électrolyse contient l'uranium substantiellement au degré (VI) et plus particulièrement sa teneur en U (VI) est au moins de 85% de la teneur totale en uranium. Afin de poursuivre le traitement de ladite phase ne contenant l'uranium que sous forme U (VI) il peut s'avérer le cas échéant judicieux de compléter l'oxydation de l'uranium par un ajout faible d'un agent d'oxydation chimique tel que le peroxyde d'hydrogène ou par action de l'air ou de l'oxygène éventuellement sous pression élevée.

La phase aqueuse résultant des traitements précédents est alors soumise à un traitement au moyen d'une phase organique d'extraction de même nature que celle du premier cycle dans un appareil d'échange liquide-liquide tel que décrit ci-dessus, le cas échéant refroidi afin de favoriser l'opération, ce par quoi l'on obtient une phase aqueuse épuisée en uranium et une phase organique chargée en uranium. Le rapport du débit de la solution aqueuse du troisième cycle au débit de la solution organique est habituellement compris entre 0,2 et 3. La phase aqueuse épuisée, alimente en totalité le compartiment cathodique d'une cellule électrolytique à séparateur sous tension de courant continu ce par quoi l'on régénère substantiellement la forme réductrice de l'agent d'oxydo-réduction. Ensuite, la phase aqueuse est à nouveau introduite à l'étape précédente de mise en contact et de réextraction de la phase organique d'extraction qui fait partie du premier cycle. La solution aqueuse d'acide complexant et d'agent d'oxydo-réduction circule par conséquent selon une boucle fermée comportant deux mises en contact avec une phase organique d'extraction et le passage dans les deux compartiments d'une même cellule électrolytique à séparateur, cette boucle constituant le troisième cycle de la présente invention.

La phase organique d'extraction précédente chargée en uranium après séparation est ensuite, le cas échéant, lavée au moyen d'eau ou d'une solution acide afin d'y réduire la teneur en acide complexant. Ensuite, la phase organique purifiée subit un traitement de régénération de l'uranium selon des procédés connus.

C'est ainsi que la phase organique peut être traitée au moyen d'une solution aqueuse contenant des ions ammonium et carbonate, ce par quoi l'on précipite l'ammonium uranyl tricarbonate (AUT), qui après séparation des phases, est filtré puis calciné pour fournir $U_3O_8$. La phase organique d'extraction résultante, épuisée en uranium, est ensuite recyclée à l'étape d'extraction précédente de la phase aqueuse du troisième cycle après avoir subi une étape de lavage à l'eau ou au moyen d'un acide nécessaire pour régénérer la forme acide de l'extractant dans le cas où celui-ci comporte un extractant cationique. La phase organique d'extraction précédente circule sous forme d'une boucle fermée qui constitue le deuxième cycle selon la présente invention.

L'invention s'applique spécialement bien dans le cas particulier où le couple oxydo-réducteur est le couple fer (III)/fer (II) et la solution aqueuse faisant partie du troisième cycle du procédé est une solution aqueuse d'acide phosphorique. Alors, une partie du fer (III) contenu dans la phase organique du premier cycle, et provenant de l'extraction par cette dite phase organique d'une partie du fer (III) contenu naturellement dans les acides phosphoriques de voie humide, peut être réextraite par la solution aqueuse d'acide phosphorique constituant le troisième cycle du procédé. Pour la même raison, une partie du fer (III) contenu dans cette dernière est réextraite par la phase organique constituant le deuxième cycle du procédé.

Pour maintenir une concentration en fer total sensiblement constante dans la solution aqueuse d'acide phosphorique constituant le troisième cycle, il convient de rendre égale la quantité de fer réextraite de la phase organique constituant le premier cycle, à celle extraite par la phase organique du deuxième cycle, ce qui est aisément réalisable par réglage de l'efficacité de réduction du fer (III) en fer (II) du compartiment cathodique de la cellule d'électrolyse située dans la boucle formant le troisième cycle.

Il est alors possible de s'affranchir de tout ajout de fer pour assurer le fonctionnement du procédé.

Une variante de la présente invention est celle où l'on souhaite en outre réaliser un lavage de la phase organique constituant le deuxième cycle du procédé par un faible débit d'acide phosphorique exempt de fer, ceci afin de baisser substantiellement la teneur en fer dans ladite phase organique.

La phase organique d'extraction, chargée en uranium, après séparation, subit alors un premier lavage au moyen d'un faible débit d'une solution aqueuse d'acide phosphorique exempt de fer (c'est-à-dire contenant de préférence moins de 50 mg/l de fer) et de préférence de titre en $P_2O_5$ voisin de celui de la solution aqueuse d'acide phosphorique circulant dans le troisième cycle du procédé, dans un appareil d'échange liquide-liquide.

Cette phase organique ainsi substantiellement purifiée en fer subit ensuite, le cas échéant, un deuxième lavage au moyen d'eau ou d'une solution acide afin d'y réduire la teneur en acide complexant puis est traitée conformément au procédé précédemment décrit.

La solution aqueuse d'acide phosphorique résultant, après séparation, de la première opération de lavage peut alors judicieusement rejoindre la solution aqueuse d'acide phosphorique constituant le troisième cycle du procédé au point où elle alimente l'appareil d'extraction de l'uranium par la phase organique du deuxième cycle.

La solution aqueuse résultante, après épuisement en uranium et avant passage dans le compartiment cathodique de la cellule d'électrolyse subit alors une purge d'un débit égal à celui de l'acide phosphorique utilisé pour le premier lavage précédemment décrit.

Comme précédemment, pour maintenir une concentration en fer sensiblement constante dans la solution aqueuse d'acide phosphorique constituant le troisième cycle, il convient de rendre égale la quantité de fer réextraite de la phase organique constituant le premier cycle à celle évacuée par cette purge, ce qui est aisément réalisable par réglage de l'efficacité de réduction du fer (III) en fer (II) du compartiment cathodique de la cellule électrolytique à séparateur sous tension continue du troisième cycle.

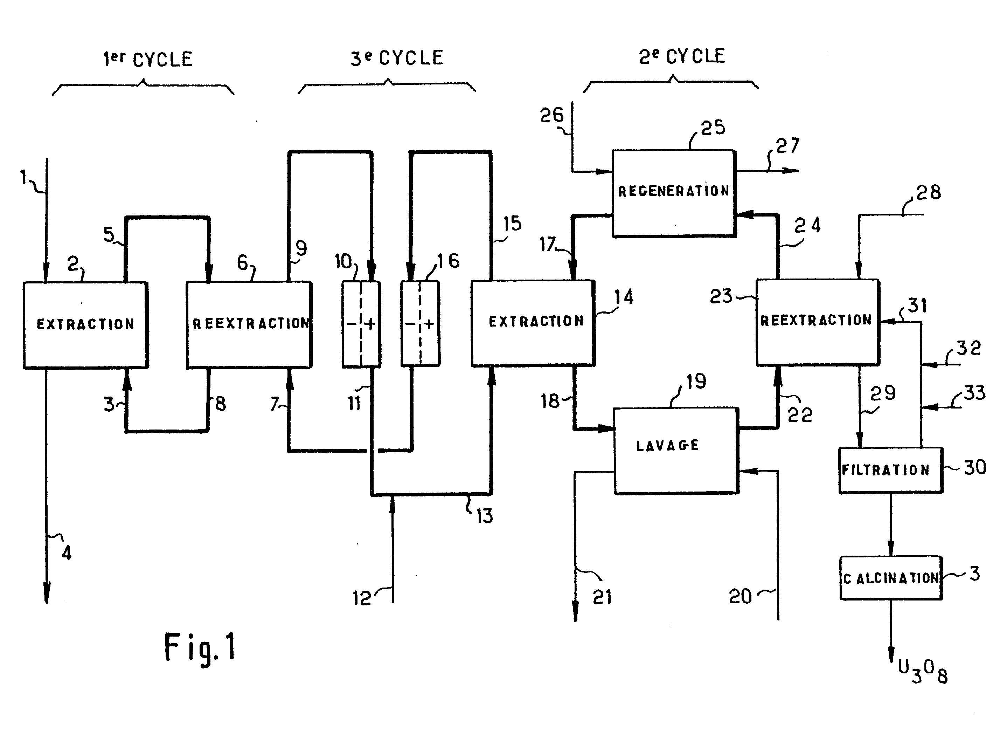

L'invention sera mieux comprise en se référant à la fig. 1 suivante qui est une application de l'invention à un acide phosphorique brut obtenu par voie humide.

L'acide brut, le cas échéant après traitement de stabilisation, est introduit par la ligne 1 dans un appareil d'extraction 2 où il est mis en contact avec la phase organique d'extraction du premier cycle entrant par la ligne (3). De l'appareil (2) sort l'acide brut épuisé par (4) qui est ensuite utilisé pour d'autres applications. La phase organique (5) chargée en uranium alimente ensuite l'appareil de réextraction (6) où elle est mise en contact avec la solution aqueuse (7) d'acide complexant et d'agent d'oxydo-réduction. La phase organique sort épuisée par la ligne (8) et alimente en boucle fermée l'appareil (2). La phase aqueuse sortant en (9) alimente le compartiment anodique (10) d'une cellule électrolytique à séparateur sous tension de courant continu d'où elle sort oxydée en (11); puis elle est le cas échéant traitée par le courant (12) d'oxydant additionnel, le courant résultant (13) alimentant l'appareil d'extraction (14). Le courant aqueux (15) épuisé en uranium sortant de l'extraction (14) alimente le compartiment cathodique (16) d'une cellule électrolytique à séparateur sous tension de courant continu et alimente à nouveau l'appareil de réextraction (6) sous la forme d'une boucle de circulation fermée.

L'appareil d'extraction (14) est par ailleurs alimenté par la ligne (17) au moyen de la phase organique d'extraction du deuxième cycle, d'où elle sort en (18) chargée en uranium et alimente une batterie de lavage (19) où la phase est lavée à contre-courant par de l'eau entrant par la ligne (20), l'eau de lavage sortant de la batterie (19) par la ligne (21). La phase organique lavée sort en (22) et alimente un appareil de réextraction (23) d'où elle sort épuisée en (24) pour alimenter ensuite un appareil de régénération (25) où elle est lavée en un ou plusieurs étages au moyen d'une solution aqueuse diluée d'acide entrant par (26). La phase organique d'extraction qui vient d'être régénérée alimente à nouveau l'appareil d'extraction (14) par la ligne (17). La solution acide de lavage sortant par (27) peut être utilisée à un ou plusieurs stades de la fabrication de l'acide phosphorique de départ. L'appareil de réextraction (23) est alimenté par un courant aqueux (28) contenant des ions carbonate et ammonium, ce par quoi l'on précipite AUT. La suspension aqueuse résultante de AUT sort de l'appareil (23) par la ligne (29), puis elle est filtrée en (30), les eaux-mères étant recyclées par (31) après ajout d'ions carbonate et ammonium par (33) et (32). Le gâteau de filtration, le cas échéant après lavage, est ensuite calciné en (34) pour fournir $U_3O_8$ recherché.

On donne ci-après des exemples illustratifs de la mise en œuvre de la présente invention.

EXEMPLE 1:

Cet exemple illustre le mode de réalisation de la fig. 1.

On introduit en (1) un acide phosphorique brut de voie humide ayant subi un prétraitement de stabilisation des matières organiques et minérales et contenant 30% en poids de $P_2O_5$ et 100 mg/l d'uranium (VI) sous un débit de 96 m³/heure. Le courant alimente l'extracteur (2) constitué d'une colonne agitée où l'on introduit une solution de 0,5 molaire d'acide di-(2 éthylhexyl) phosphorique et 0,125 molaire d'oxyde de trioctylphosphine dans le kérosène sous un débit de 48 m³/h, le tout fonctionnant à 50 °C. La phase organique (5) chargée en uranium alimente l'appareil de réextraction (6), maintenu à 55 °C, comportant trois mélangeurs-décanteurs où elle est mise en contact avec une solution aqueuse (7) contenant:

– 30% en poids de $P_2O_5$
– 23,6 g/l en ions fer (II)
– 6,1 g/l en ions fer (III)

sous un débit de 1,3 m³/h.

Le courant organique (8) est recyclé dans l'appareil (2). Le courant aqueux résultant (9) alimente les quinze compartiments anodiques d'une batterie de cellules électrolytiques à séparateur unique dont les compartiments anodique et cathodique, mesurant 1 × 1 m, sont séparés par une membrane constituée de polymère perfluorésulfonique, la distance électrode-membrane étant de 5 mm. On applique à la cellule un courant continu de 15 000 ampères, la tension aux bornes s'établissant à 2,9 volts. Le courant aqueux (11) issu des compartiments anodiques reçoit par (12) du peroxyde d'hydrogène à 70% de concentration en poids sous un débit de 0,19 kg/h et le courant résultant (13), d'une teneur en uranium (VI) de 7 g/l et en fer (III) de 30 g/l alimente l'appareil d'extraction (14) constitué de six mélangeurs-décanteurs maintenus à 30 °C, et ressort en (15), pour alimenter les quinze compartiments cathodiques d'une batterie de cellules électrolytique à séparateur unique. Le courant aqueux (7) issu des compartiments cathodiques alimente ensuite l'appareil (6).

Dans l'appareil (14), on introduit également par (17) un courant de 2,1 m³/heure d'une phase organique d'extraction 0,3 molaire en HDEHP et 0,075 molaire en TOPO dans du kérosène. La phase organique ressort en (18), alimente la batterie de lavage (19) comprenant trois mélangeurs-décanteurs, au moyen d'un courant de 0,21 m³/heure d'eau qui ressort par (21) sous forme d'une solution très diluée d'acide phosphorique contenant 0,75% de $P_2O_5$. La phase organique lavée (22) alimente l'appareil de réextraction (23) constituée de deux mélangeurs-décanteurs où elle est mise en contact avec une solution aqueuse de carbonate d'ammonium 0,5 molaire sous un débit de 100 litres/heure et une solution aqueuse de carbonate d'ammonium (31) à 2 moles par litre sous un débit de 4,2 m³/heure. La phase organique (24) épuisée en uranium subit une régénération dans l'appareil (25), constitué d'un mélangeur-décanteur, au moyen d'une solution aqueuse (26) d'acide sulfurique à une concentration de 25% en poids sous un débit de 2,1 m³/heure. On recueille en (27) la solution de lavage sous un débit de 2,2, m³/heure titrant 10,7 kg $NH_3$/heure.

La suspension aqueuse (29) de AUT est filtrée en (30), les eaux-mères recyclées en (31), la gâteau étant calciné pour fournir $U_3O_8$.

Les consommations journalières nécessaires à une unité de traitement de 300 000 tonnes par an d'acide phosphorique exprimé en $P_2O_5$ s'établissent comme suit:

– fer: néant
– peroxyde d'hydrogène: à 70% de concentration, basé sur un rendement d'oxydation électrolytique de l'uranium de 90%: 4,5 kg.
– énergie électrique: 1020 kWh.

EXEMPLE COMPARATIF 1:

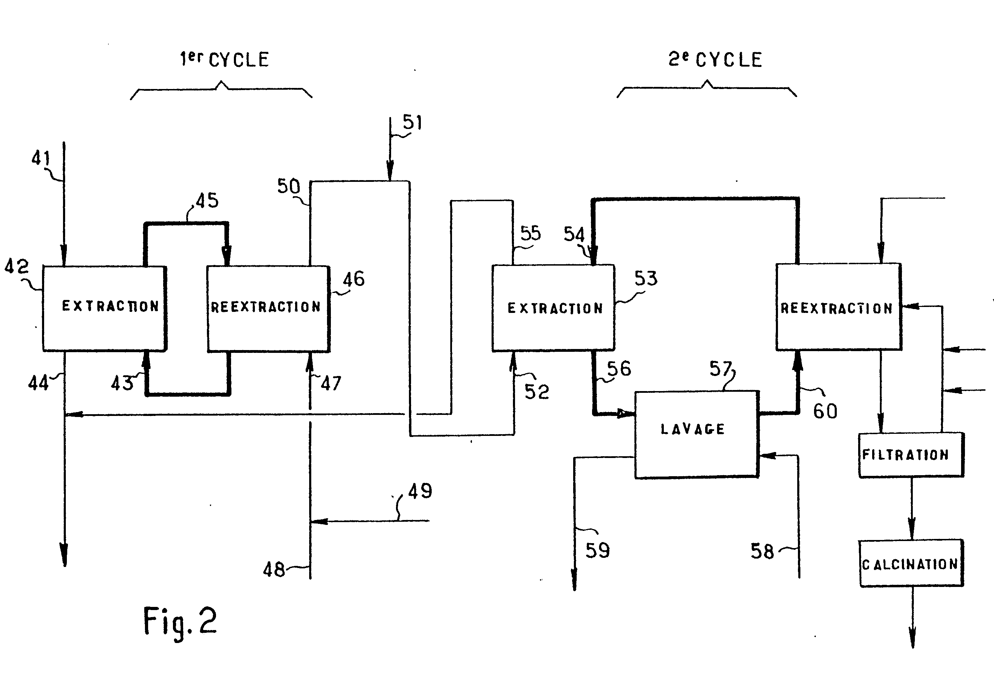

On traite le même acide phosphorique brut de voie humide provenant d'une unité de 300 000 tonnes par an en $P_2O_5$ selon le schéma de la fig. 2, comportant certains des appareils de la fig. 1 sauf indication contraire.

L'acide brut alimente par (41) sous un débit de 96 m³/heure la colonne d'extraction (42) où il est mis en contact avec la même phase organique (43) que dans l'exemple (1) sous un débit de 48 m³/heure. Après séparation la phase organique alimente l'appareil de réextraction (46) identique à l'appareil (6) de la fig. 1, où elle est mise en contact avec une solution aqueuse (47) d'un débit de 1,3 m³/heure et constituée d'un débit de 1,2 m³/heure d'acide phosphorique (48) à 32,7% en poids de $P_2O_5$ auquel on a ajouté 153 kg/heure de sulfate ferreux heptahydraté. La phase organique (43) sortant de (46) alimente l'appareil (42). Le courant aqueux (50) reçoit en (51) un courant de peroxyde d'hydrogène à 70% sous un débit de 6,4 kg/heure, puis alimente l'appareil d'extraction (53) identique à (14) de la fig. 1. La solution aqueuse épuisée sortant en (55) est réunie à l'acide épuisé (44) pour être ensuite envoyé aux unités de concentration de l'acide phosphorique. La phase organique (54) entrant dans l'appareil (53) est identique à la phase (17) de l'exemple 1, sous un débit de 2,1 m³/heure. A la sortie de l'appareil (53), la phase organique (56) est lavée en (57) identique à (19) de l'exemple 1 au moyen d'eau sous un débit de 0,21 m³/heure, la solution d'acide phosphorique dilué du lavage sortant en (59). La fin du traitement est identique à celui de l'exemple 1.

Les consommations journalières pour une unité de même capacité de traitement s'établissent comme suit:

– fer: sous forme de sulfate ferreux heptahydraté: 3670 kg
– peroxyde d'hydrogène à 70% de concentration: 154 kg
– $P_2O_5$: 13 tonnes

EXEMPLE 2:

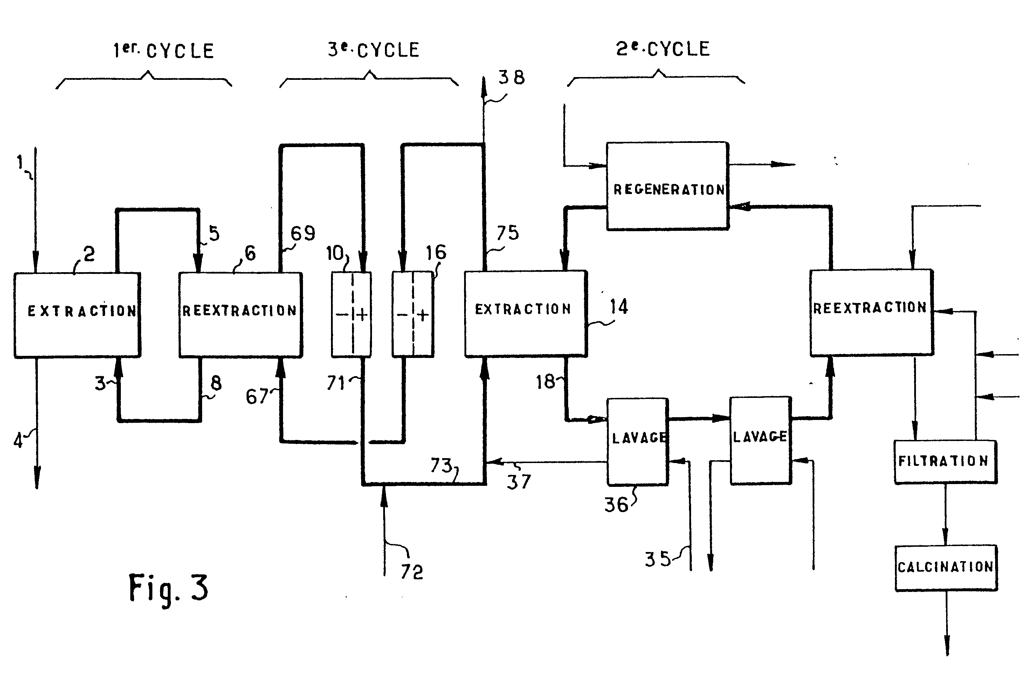

Une variante de l'invention est illustrée en se référant à la fig. 3 suivante qui diffère de la fig. 1 en ce que la phase organique (18) provenant de l'appareil (14) est mise en contact dans l'appareil (36) avec un flux d'acide phosphorique exempt de fer (35) pour réaliser un premier lavage, la solution d'acide phosphorique résultante (37) étant réunie au flux (73) pour alimenter l'appareil d'extraction (14). La phase aqueuse (75) épuisée en uranium alimente pour une partie les compartiments cathodiques de la batterie de cellules (16) de même constitution que ceux de l'exemple 1, l'autre partie (38) pouvant être réutilisée en un ou plusieurs points du procédé phosphorique.

Les premières étapes du procédé sont identiques à celles de l'exemple 1. La phase organique (5) chargée en uranium (VI) alimente l'appareil de réextraction (6), maintenu à 55°C, comportant trois mélangeurs-décanteurs où elle est mise en contact avec une solution aqueuse (67) contenant:
- 30% en poids de $P_2O_5$
- 21,9 g/l en ions fer (II)
- 2,5 g/l en ions fer (III)

sous un débit de 1,3 m³/h.

Le courant aqueux résultant (69) alimente les compartiments anodiques d'une batterie de cellules (10) de même constitution que ceux de l'exemple 1, d'où il ressort en (71). On lui adjoint un courant (72) de peroxyde d'hydrogène à 70% de concentration en poids sous un débit de 0,19 kg/heure et le courant résultant (73) d'une teneur en uranium (VI) de 7 kg/m³ et en fer (III) de 30 kg/m³ est réuni au courant (37) issu de l'appareillage de lavage (36) constitué d'une batterie de 6 mélangeurs-décanteurs et alimente l'appareil d'extraction (14) maintenu à 30°C. Il ressort en (75), une partie étant constituée par le flux (38) d'un débit de 0,3 m³/heure contenant 24,4 kg/m³ de fer (III), l'autre partie alimentant les compartiments cathodiques de la batterie de cellules précitée, d'où il ressort à l'état substantiellement réduit pour être introduit dans l'appareil de réextraction (6). On applique aux bornes de la cellule une intensité de 13 600 ampères, la tension s'établit à 2,9 volts.

On voit donc que les consommations journalières pour une unité de traitement de même capacité que dans l'exemple 1 s'établissent comme suit:
- fer: néant
- peroxyde d'hydrogène: à 70% de concentration, basé sur un rendement d'oxydation électrolytique de l'uranium de 90%: 4,5 kg
- énergie électrique: 950 kWh.

**Revendications**

1. Procédé continu de récupération de l'uranium contenu dans un acide phosphorique impur du type comportant dans un premier cycle le traitement de l'acide phosphorique impur au moyen d'une phase organique d'extraction pour l'uranium (VI) mais extrayant peu l'uranium (IV), puis la séparation des phases, l'extraction en retour de la phase organique résultante chargée en uranium (VI) au moyen d'une solution aqueuse de réextraction de l'uranium (IV) et contenant un agent d'oxydoréduction à l'état réduit qui est réducteur de l'uranium (VI) en uranium (IV), puis la séparation des phases et le recyclage de la phase organique épuisée en uranium à l'extraction de l'acide phosphorique impur; l'oxydation de la précédente solution aqueuse chargée en uranium (IV) ce par quoi l'on oxyde l'uranium (IV) en uranium (VI) et l'agent d'oxydoréduction; dans un deuxième cycle, le traitement de la solution aqueuse précédente au moyen d'une deuxième phase organique d'extraction de l'uranium (VI), puis la séparation des phases, le lavage de la phase organique chargée en uranium (VI) au moyen d'un acide et/ou d'eau, puis la séparation d'une phase organique épurée d'où l'on récupère l'uranium par traitement de ladite phase organique au moyen d'une solution aqueuse contenant des ions carbonate et ammonium de manière à précipiter dans la phase aqueuse l'ammonium uranyl tricarbonate, et le recyclage de la précédente phase organique épuisée en uranium à l'extraction précédente, caractérisé en ce que la solution aqueuse résultant de la réextraction du premier cycle est traitée en totalité dans le compartiment anodique d'une cellule électrolytique à séparateur sous tension de courant continu, de manière à recueillir une phase aqueuse contenant de l'uranium sous forme U (VI) et l'agent d'oxydoréduction à l'état oxydé, l'oxydation de l'uranium étant éventuellement complétée par addition d'un agent oxydant et, le cas échéant, le titre de ladite phase aqueuse en acide complexant étant réajusté, en ce qu'on traite ensuite ladite solution aqueuse au moyen de la phase organique d'extraction du deuxième cycle, puis, après séparation des phases, on traite la solution aqueuse résultante épuisée en uranium dans le compartiment cathodique de la cellule électrolytique précitée de manière à réduire l'agent d'oxydoréduction, avant de la recycler à l'étape de réextraction du premier cycle, ladite solution aqueuse circulant ainsi en boucle fermée entre les premier et deuxième cycles, sous la forme d'un troisième cycle; et en ce que la phase organique d'extraction du deuxième cycle épuisée en uranium après la séparation des phases et avant son recyclage à l'extraction est lavée au moyen d'une solution aqueuse d'acide.

2. Procédé selon la revendication 1, caractérisé en ce que la concentration en acide phosphorique de l'acide impur est comprise entre 20 et 60% en poids de $P_2O_5$ et en ce que sa teneur en uranium est comprise entre 30 et 300 mg/l.

3. Procédé selon la revendication 1 ou 2, caractérisé en ce que la phase organique du premier cycle contient un extractant à caractère cationique pour l'uranium au degré d'oxydation (VI).

4. Procédé selon la revendication 3, caractérisé en ce que l'extractant cationique est au moins un membre choisi parmi des acides mono- ou dialkylphosphoriques, alkylphénylphosphoriques, alkylphosphiniques, alkylphosphoniques, alkylpyrophosphoriques, les groupements alkyle contenant de 4 à 10 atomes de carbone.

5. Procédé selon la revendication 3, caractérisé en ce que l'extractant cationique est l'acide di-(-2 éthylhexyl) phosphorique.

6. Procédé selon la revendication 4 ou 5, caractérisé en ce que ladite phase organique contient en plus un agent synergique d'extraction.

7. Procédé selon la revendication 6, caractérisé en ce que ladite phase organique contient de l'acide di-(-2 éthylhexyl) phosphorique et de l'oxyde de trioctylphosphine.

8. Procédé selon la revendication 1, caractérisé en ce que ladite phase organique du premier cycle contient un extractant à caractère anionique choisi parmi des amines secondaires ou tertiaires non solubles dans l'eau.

9. Procédé selon la revendication 1, caractérisé en ce que ladite phase organique du premier cycle contient un extractant à caractère neutre non miscible à l'eau, choisi parmi des phosphates de trialkyle.

10. Procédé selon l'une quelconque des revendications précédentes, caractérisé en ce qu'en plus, ladite phase organique du premier cycle contient un diluant ou solvant organique inerte vis-à-vis du mélange extractant, choisi parmi des hydrocarbures aliphatiques, aromatiques, halogénés ou non, des éthers de pétrole.

11. Procédé selon la revendication 7, caractérisé en ce que le diluant inerte est le kérosène.

12. Procédé selon les revendications 7, 10 ou 11, caractérisé en ce que la concentration dans le diluant inerte de l'acide di-(-2 éthylhexyl) phosphorique est comprise entre 0,1 et 2 molaires et en ce que la concentration de l'agent synergique est comprise entre 0,01 et 2 molaires.

13. Procédé selon l'une quelconque des revendications précédentes, caractérisé en ce que la concentration en uranium dans ladite phase organique du premier cycle est comprise entre 20 et 3000 mg par litre, de préférence entre 50 et 500 mg par litre.

14. Procédé selon l'une quelconque des revendications précédentes, caractérisé en ce que la solution aqueuse de réextraction du troisième cycle est une solution d'un acide fort, complexant de l'uranium (IV), choisi parmi l'acide phosphorique, et l'acide chlorhydrique.

15. Procédé selon l'une quelconque des revendications 7, 10, 11, 12 ou 14, caractérisé en ce que la concentration en acide phosphorique de ladite solution aqueuse de réextraction est comprise entre 18 et 70% en poids de $P_2O_5$, de préférence supérieure à 28%.

16. Procédé selon l'une quelconque des revendications 1 à 7 et 9 à 15, caractérisé en ce que l'agent d'oxydoréduction à l'état réduit, présent dans ladite solution aqueuse de réextraction, comprend des ions fer (II).

17. Procédé selon la revendication 16, caractérisé en ce que les ions fer (II) sont présents en une quantité comprise entre 0,5 et 100 grammes par litre de solution aqueuse.

18. Procédé selon l'une quelconque des revendications précédentes, caractérisé en ce que l'on opère à une température comprise entre 20 et 80 °C, de préférence au voisinage de 50 °C.

19. Procédé selon l'une quelconque des revendications précédentes, caractérisé en ce que le rapport du débit de la phase organique d'extraction du premier cycle au débit de la solution aqueuse de réextraction est comprise entre 20 et 60.

20. Procédé selon l'une quelconque des revendications précédentes, caractérisé en ce que après passage dans le compartiment anodique de la cellule électrolytique à séparateur sous tension de courant continu, on complète l'oxydation de l'uranium contenu dans la solution aqueuse du troisième cycle au moyen de peroxyde d'hydrogène, d'air ou d'oxygène, le cas échéant sous pression.

21. Procédé selon l'une quelconque des revendications précédentes, caractérisé en ce que la phase organique d'extraction du deuxième cycle est de même nature que celle du premier cycle.

22. Procédé selon l'une quelconque des revendications 12 à 21, caractérisé en ce que le rapport du débit de la solution aqueuse du troisième cycle au débit de la phase organique d'extraction du deuxième cycle est compris entre 0,2 et 3.

23. Procédé selon l'une quelconque des revendications précédentes caractérisé en ce que la phase organique du deuxième cycle chargée en uranium est lavée au moyen d'une solution d'acide phosphorique exempt de fer avant la réextraction de l'uranium, le titre de l'acide phosphorique étant voisin de celui de la solution aqueuse du troisième cycle.

24. Procédé selon la revendication précédente, caractérisé en ce qu'après le lavage à l'acide phosphorique, la phase organique du deuxième cycle chargée en uranium est lavée au moyen d'eau, en ce que le courant d'acide phosphorique de lavage est réuni à la solution aqueuse du troisième cycle avant sa mise en contact avec la phase organique du deuxième cycle et en ce que l'on soutire de la solution aqueuse épuisée du troisième cycle après contact avec la phase organique du deuxième cycle, un débit de solution égal à celui de la solution de l'acide phosphorique utilisée pour le lavage précédent.

25. Application du procédé selon l'une quelconque des revendications précédentes au traitement d'un acide phosphorique impur obtenu par voie humide.

**Claims**

1. A continuous method of recovering the uranium contained in an impure phosphoric acid of the type comprising, in a first cycle, treating the impure phosphoric acid by means of an organic extracting phase for extracting uranium (VI) but substantially not extracting uranium (IV), then separating the phases, extracting the resulting uranium (VI)-charged organic phase, in return, by means of an aqueous solution for re-extracting uranium (IV) and containing an oxido-reducing agent in the reduced state, for reducing uranium (VI) to uranium (IV), then separating the phases and recycling the organic phase which ist exhausted in respect of uranium to the step of extracting the impure phosphoric acid; oxidising the preceding uranium (IV)-charged aqueous solution, thereby oxidising uranium (IV) to uranium (VI) and the oxido-reducing agent; in a second cycle, treating the preceding aqueous solution with a second organic phase for extracting uranium (VI), then separating the phases, washing the uranium (VI)-charged organic phase by means of an acid and/ or water, then separating a purified organic phase from which the uranium is recovered by treating said organic phase by means of an aqueous solution containing carbonate and ammonium ions so as to precipitate ammonium uranyl tricarbonate in the aqueous phase, and recycling the preceding organic phase which is exhausted in respect of uranium to the preceding extraction step, characterised in that the aqueous solution resulting from the re-extraction step in the first cycle is treated in its entirety in the anode compartment of a d.c. voltage separator-type electrolytic cell so as to collect an aqueous phase containing uranium in the form U (VI) and the oxido-reducing agent in the oxidised state, oxidation of the uranium possibly being completed by the addition of an oxidising agent and, if appropriate, the content of complexing acid in the aqueous phase being re-adjusted, that said aqueous solution is then treated by means of the organic extracting phase of the second cycle, then, after separation of the phases, the resulting aqueous solution which is exhausted in respect of uranium is treated in the cathode compartment of said electrolytic cell so as to reduce the oxido-reducing agent, before recycling it to the re-extraction step in the first cycle, said aqueous solution thus circulating in a closed loop between the first and second cycles, in the form of a third cycle; and that the organic extracting phase of the second cycle, which is exhausted in respect of uranium, after separation of the phases and before it is re-cycled to the extraction step, is washed by means of an aqueous acid solution.

2. A method according to claim 1 characterised in that the concentration of phosphoric acid in the impure acid is from 20 to 60% by weight of $P_2O_5$ and that its uranium content is from 30 to 300 mg/l.

3. A method according to claim 1 or claim 2 characterised in that the organic phase in the first cycle contains an extracting agent of cationic nature for uranium in the degree of oxidation (VI).

4. A method according to claim 3 characterised in that the cationic extracting agent is at least one member selected from mono- or dialkyl phosphoric, alkylphenylphosphoric, alkylphosphinic, alkylphosphonic and alkylpyrophosphoric acids, the alkyl groups containing from 4 to 10 carbon atoms.

5. A method according to claim 3 characterised in that the cationic extracting agent is di-(2-ethylhexyl)phosphoric acid.

6. A method according to claim 4 or claim 5 characterised in that said organic phase further contains a synergistic extracting agent.

7. A method according to claim 6 characterised in that said organic phase contains di-(2-ethylhexyl)phosphoric acid and trioctylphosphine oxide.

8. A method according to claim 1 characterised in that said organic phase in the first cycle contains an extracting agent of anionic nature which is selected from water-insoluble secondary or tertiary amines.

9. A method according to claim 1 characterised in that said organic phase in the first cycle contains an extracting agent of a neutral nature, that is water-immiscible and selected from trialkylphosphates.

10. A method according to any one of the preceding claims characterised in that in addition said organic phase in the first cycle contains an organic solvent or diluent that is inert with respect to the extracting mixture and that is selected from halogenated or unhalogenated aliphatic or aromatic hydrocarbons and petroleum ethers.

11. A method according to claim 7 characterised in that the inert diluent is kerosene.

12. A method according to claims 7, 10 or 11 characterised in that the concentration of di-(2-ethylhexyl)phosphoric acid in the inert diluent is from 0.1 to 2 moles and that the concentration of synergistic agent is from 0.01 to 2 moles.

13. A method according to any one of the preceding claims characterised in that the concentration of uranium in said organic phase in the first cycle is from 20 to 3000 mg per litre, preferably from 50 to 500 mg per litre.

14. A method according to any one of the preceding claims characterised in that the aqueous re-extracting solution in the third cycle is a solution of a strong acid for complexing uranium (IV), that is selected from phosphoric acid and hydrochloric acid.

15. A method according to any one of claims 7, 10, 11, 12 and 14 characterised in that the concentration of phosphoric acid in the aqueous re-extracting solution is from 18 to 70% by weight of $P_2O_5$, preferably more than 28%.

16. A method according to any one of claims 1 to 7 and 9 to 15 characterised in that the oxido-reducing agent in the reduced state, which is present in the aqueous re-extracting solution, contains iron (II) ions.

17. A method according to claim 16 characterised in that the iron (II) ions are present in an amount of from 0.5 to 100 grams per litre of aqueous solution.

18. A method according to any one of the preceding claims characterised in that operation is effected at a temperature of from 20 to 80 °C, preferably in the vicinity of 50 °C.

19. A method according to any one of the preceding claims characterised in that the ratio of the flow rate of the organic extracting phase in the first cycle to the flow rate of the aqueous re-extracting solution is from 20 to 60.

20. A method according to any one of the preceding claims characterised in that, after passing into the anode compartment of the d.c. voltage separator-type electrolytic cell, oxidation of the uranium contained in the aqueous solution of the third cycle is completed by means of hydrogen peroxide, air or oxygen, if appropriate under pressure.

21. A method according to any one of the preceding claims characterised in that the organic extracting phase of the second cycle is of the same nature as that of the first cycle.

22. A method according to any one of claims 12 to 21 characterised in that the ratio of the flow rate of the aqueous solution of the third cycle to the flow rate of the organic extracting phase in the second cycle is from 0.2 to 3.

23. A method according to any one of the preceding claims characterised in that the uranium-charged organic phase in the second cycle is washed by means of a solution of iron-free phosphoric acid before re-extraction of the uranium, the phosphoric acid content being close to that of the aqueous solution in the third cycle.

24. A method according to the preceding claim characterised in that, after the step of washing with phosphoric acid, the uranium-charged organic phase of the second cycle is washed with water, that the flow of washing phosphoric acid is combined with the aqueous solution of the third cycle before being brought into contact with the organic phase of the second cycle and that a flow of solution equal to that of the solution of phosphoric acid used for the preceding washing step is taken from the exhausted aqueous solution of the third cycle after contact with the organic phase of the second cycle.

25. Use of the method according to any one of the preceding claims for treating an impure wet-process phosphoric acid.

**Patentansprüche**

1. Kontinuierliches Verfahren zur Wiedergewinnung des in unreiner Phosphorsäure enthaltenen Urans, mit einem ersten Kreislauf zur Behandlung der unreinen Phosphorsäure mit einer organischen Extraktionsphase für Uran (VI), die nur wenig Uran (IV) extrahiert, Trennung der Phasen, Rückextraktion der erhaltenen organischen mit Uran (VI) beladenen Phase, mit einer wässrigen Lösung für die Rückextraktion von Uran (IV), die ein Oxydations-Reduktions-Mittel im reduzierten Zustand enthält, der ein Reduktionsmittel für Uran (VI) zu Uran (IV) ist, Trennung der Phasen und Rückführung der uranfreien Phase zur Extraktion der unreinen Phosphorsäure, Oxydation der genannten wässrigen mit Uran (IV) beladenen Lösung, bei der das Uran (IV) zu Uran (VI) und das Oxydations-Reduktions-Mittel oxydiert werden; mit einem zweiten Kreislauf zur Behandlung der genannten wässrigen Lösung mit einer zweiten organischen Phase zur Extraktion von Uran (VI), Trennung der Phasen, Wäsche der organischen mit Uran (VI) beladenen Phase mit Hilfe einer Säure und/oder Wasser, Abtrennung der gereinigten organischen Phase, aus der man das Uran durch Behandlung der genannten organischen Phase mit einer wässrigen Lösung gewinnt, die Carbonat- und Ammoniumionen enthält, um aus der wässrigen Phase Ammoniumuranyltricarbonat zu fällen, und Rückführung der genannten an Uran erschöpften Phase zur vorgenannten Extraktion, dadurch gekennzeichnet, dass die aus der Rückextraktion des ersten Kreislaufs stammende wässrige Lösung als Ganzes der aniodischen Kammer einer Gleichstromelektrolysezelle mit Trennwand zugeführt wird, um eine wässrige Phase zu erhalten, die das Uran in Form von U(VI) und das Oxydations-Reduktions-Mittel im oxydierten Zustand enthält, wobei die Oxydation des Urans gegebenenfalls durch Zugabe eines Oxydationsmittels vervollständigt wird und erforderlichenfalls der Gehalt der genannten wässrigen Phase an komplexbildender Säure eingestellt wird, indem man diese wässrige Lösung mit der organischen Extraktionsphase des zweiten Kreislaufs behandelt und nach Trennung der Phasen die erhaltene wässrige, an Uran erschöpfte Phase in der Kathodenkammer der erwähnten Elektrolysezelle behandelt, um das Oxydations-Reduktions-Mittel zu reduzieren, bevor es zur Stufe der Rückextraktion des ersten Kreislaufs zurückgeleitet wird, so dass die wässrige Lösung in einem geschlossenen Kreislauf zwischen dem ersten und zweiten Kreislauf in Form eines dritten Kreislaufes zirkuliert, und dass die uranfreie organische Extraktionsphase des zweiten Kreislaufes nach der Trennung der Phasen und vor ihrer Rückführung zur Extraktion mit einer wässrigen Lösung einer Säure gewaschen wird.

2. Verfahren nach Anspruch 1, dadurch gekennzeichnet, dass die Konzentration an Phosphorsäure der unreinen Säure zwischen 20 und 60 Gew.-% $P_2O_5$ liegt und dass ihr Gehalt an Uran 30 bis 300 mg/l beträgt.

3. Verfahren nach Anspruch 1 oder 2, dadurch gekennzeichnet, dass die organische Phase des ersten Kreislaufs ein kationisches Extraktionsmittel für Uran in der Oxydationsstufe (VI) enthält.

4. Verfahren nach Anspruch 3, dadurch gekennzeichnet, dass das kationische Extraktionsmittel wenigstens ein Mitglied der Mono- oder Dialkylphosphor-, Alkylphenylphosphor-, Alkylphosphin-, Alkylphosphon- oder Alkylpyrophosphorsäuren ist, wobei die Alkylgruppen 4 bis 10 Kohlenstoffatome enthalten.

5. Verfahren nach Anspruch 3, dadurch gekennzeichnet, dass das kationische Extraktionsmittel Di-(2-äthylhexyl)phosphorsäure ist.

6. Verfahren nach Anspruch 4 oder 5, dadurch gekennzeichnet, dass die organische Phase zusätzlich ein synergistisches Extraktionsmittel enthält.

7. Verfahren nach Anspruch 6, dadurch gekennzeichnet, dass die organische Phase Di-(2-äthylhexyl)phosphorsäure und Trioctylphosphinoxid enthält.

8. Verfahren nach Anspruch 1, dadurch gekennzeichnet, dass die organische Phase des ersten Kreislaufs ein anionisches Extraktionsmittel aus der Gruppe der in Wasser unlöslichen sekundären oder tertiären Amine enthält.

9. Verfahren nach Anspruch 1, dadurch gekennzeichnet, dass die organische Phase des ersten Kreislaufs ein neutrales, nicht mit Wasser mischbares Extraktionsmittel enthält, das unter den Trialkylphosphaten ausgewählt ist.

10. Verfahren nach irgendeinem der vorangehenden Ansprüche, dadurch gekennzeichnet, dass die organische Phase des ersten Kreislaufs zusätzlich ein organisches Verdünnungs- oder Lösungsmittel enthält, das gegenüber dem extrahierenden Gemisch inert ist und unter den aliphatischen, aromatischen, gegebenenfalls halogenierten Kohlenwasserstoffen oder den Petroläthern ausgewählt ist.

11. Verfahren nach Anspruch 7, dadurch gekennzeichnet, dass das inerte Verdünnungsmittel Kerosin ist.

12. Verfahren nach den Ansprüchen 7, 10 oder 11, dadurch gekennzeichnet, dass die Konzentration der Di-(2-äthylhexyl)phosphorsäure in dem inerten Verdünner 0,1- bis 2molar ist und dass die Konzentration des Synergisten 0,01- bis 2molar ist.

13. Verfahren nach irgendeinem der vorangehenden Ansprüche, dadurch gekennzeichnet, dass die Konzentration an Uran in der organischen Phase des ersten Kreislaufs 20 bis 3000 mg/l, vorzugsweise 50 bis 500 mg/l beträgt.

14. Verfahren nach irgendeinem der vorangehenden Ansprüche, dadurch gekennzeichnet, dass die wässrige Rückextraktionslösung des dritten Kreislaufs die Lösung einer starken, für Uran (IV) komplexbildenden Säure ist, die unter Phosphorsäure oder Chlorwasserstoffsäure ausgewählt wird.

15. Verfahren nach irgendeinem der Ansprüche 7, 10, 11, 12 oder 14, dadurch gekennzeichnet, dass die Konzentration der Phosphorsäure in der Rückextraktionslösung 18 bis 70, vorzugsweise über 28 Gew.-% $P_2O_5$ enthält.

16. Verfahren nach irgendeinem der Ansprüche 1 bis 7 und 9 bis 15, dadurch gekennzeichnet, dass das Oxydations-Reduktions-Mittel in dem in der wässrigen Rückextraktionslösung vorliegenden reduzierten Zustand Eisen(II)-Ionen enthält.

17. Verfahren nach Anspruch 16, dadurch gekennzeichnet, dass die Eisen(II)-Ionen in einer Menge zwischen 0,5 und 100 g/l der wässrigen Lösung vorliegen.

18. Verfahren nach irgendeinem der vorangehenden Ansprüche, dadurch gekennzeichnet, dass man bei einer Temperatur zwischen 20 und 80 °C, vorzugsweise um 50 °C arbeitet.

19. Verfahren nach irgendeinem der vorangehenden Ansprüche, dadurch gekennzeichnet, dass das Verhältnis der Zufuhr der organischen Extraktionsphase des ersten Kreislaufs zum Zufluss der wässrigen Extraktionslösung zwischen 20 und 60 liegt.

20. Verfahren nach irgendeinem der vorangehenden Ansprüche, dadurch gekennzeichnet, dass man die Oxydation des in der wässrigen Lösung des dritten Kreislaufs enthaltenen Urans nach dem Durchgang durch die aniodische Kammer der Gleichstromelektrolysezelle mit Trennwand mit Wasserstoffperoxid, Luft oder Sauerstoff, erforderlichenfalls unter Druck vollendet.

21. Verfahren nach irgendeinem der vorangehenden Ansprüche, dadurch gekennzeichnet, dass die organische Extraktionsphase des zweiten Kreislaufs von der gleichen Art ist wie die des ersten Kreislaufs.

22. Verfahren nach irgendeinem der Ansprüche 12 bis 21, dadurch gekennzeichnet, dass das Verhältnis vom Zufluss der wässrigen Lösung des dritten Kreislaufs zum Zufluss der organischen Extraktionsphase des zweiten Kreislaufs zwischen 0,2 und 3 liegt.

23. Verfahren nach irgendeinem der vorangehenden Ansprüche, dadurch gekennzeichnet, dass die organische, mit Uran beladene Phase des zweiten Kreislaufs vor der Rückextraktion des Urans mit einer eisenfreien Phosphorsäurelösung gewaschen wird, wobei der Gehalt an Phosphorsäure in der Nähe desjenigen der wässrigen Lösung des dritten Kreislaufs ist.

24. Verfahren nach dem vorangehenden Anspruch, dadurch gekennzeichnet, dass die organische mit Uran beladene Phase des zweiten Kreislaufs nach der Wäsche mit Phosphorsäure mit Wasser gewaschen wird, dass der Strom der Waschphosphorsäure mit der wässrigen Lösung des dritten Kreislaufs vereint wird, bevor er mit der organischen Phase des zweiten Kreislaufs in Berührung gebracht wird, und dass man aus der erschöpften wässrigen Lösung des dritten Kreislaufs nach Berührung mit der organischen Phase des zweiten Kreislaufs eine Menge der Lösung abzieht, die gleich der für die vorangegangene Wäsche verwendeten Phosphorsäurelösung ist.

25. Anwendung des Verfahrens nach irgendeinem der vorangehenden Ansprüche für die Behandlung unreiner, auf nassem Wege erhaltener Phosphorsäure.

Fig.1

Fig.2

1er CYCLE

2e CYCLE

41

51

45

50

42 EXTRACTION REEXTRACTION 46

55 54 53

EXTRACTION REEXTRACTION

43 47

44

56 57 60

LAVAGE

FILTRATION

49

48

59 58

CALCINATION

0 015 811

Fig. 3

1er. CYCLE    3e. CYCLE    2e. CYCLE

EXTRACTION    REEXTRACTION    EXTRACTION    REGENERATION    REEXTRACTION

LAVAGE    LAVAGE

FILTRATION

CALCINATION

0 015 811